# EUROPEAN PATENT APPLICATION

(11) **EP 2 687 372 A1**
(43) Date of publication of application: **22.01.2014**
(21) Application number: 13189331.5
(22) Date of filing: 14.11.2008
(51) Int. Cl.: B32B 27/00, B05D 5/00, C09D 1/00, A61L 2/18, E04F 15/10, E04F 15/16, B44C 5/04

(54) **Photocatalytic boards or panels and a method of manufacturing thereof**

(30) Priority: 16.11.2007 DK 200701634
(62) Divisional of application: 08848938.0
(71) Applicant: Välinge Photocatalytic AB, 263 65 Viken (SE)
(72) Inventor: Christensen Christian Ausig, DK-2900 HELLERUP (DK); Jensen, Henrik, DK-3650 ØLSTYKKE (DK); Paduraru, Anca, DK-2100 København Ø (DK); Iversen, Steen Brummerstedt, DK-2950 Vedbæk (DK); Rasmussen, Hans, DK-43330 Valsø (DK); Reenberg, Theis, DK-2200 København (DK)
(74) Representative: Westeman, Maria

(57) **Abstract**

A board or panel, having an upper surface, comprising a base; and at least one layer overlaying said base, wherein at least one of said overlaying layers comprises first nanoparticles embedded in the layer such that the upper surface shows hydrophilic characteristics. Also described are methods for manufacturing such a panel or board, and compositions for use in such methods.

## Description

The present invention relates to boards or panels with embedded photocatalyst nanoparticles. The invention further relates to methods for manufacturing such boards or panels, and to compositions containing photocatalyst nanoparticles. Further, the invention relates to laminate boards or panels and the manufacture thereof.

### Background

Laminate boards and panels are popular and relatively inexpensive solutions to get durable and decorative walls, floors and furniture with numerous design possibilities. Moreover, the laminate surfaces can be cleaned by washing as an efficient means for dirt and dust removal. For these reasons especially laminate floors are very popular in large office areas, public institutions and other places with heavy traffic of people as well as in kitchens, entrance halls, corridors and living rooms of residential homes were spillage and soiling occur on a regular basis. However, as much as the floors are well suited to keep large areas free from dirt, dust and spillage, especially shiny laminate floors are difficult to get to look clean. The typical melamine surface of the laminate floors is difficult to wash without leaving streaks of soap from the washing water. Very often the traces of the washing mop are easily seen all over the melamine laminate floors. The difficulties to get the laminate floors to look clean is of great inconvenience to many consumers otherwise pleased with their laminate flooring as evidenced by a Google search giving numerous hits to forums and message boards where the washing difficulties are debated. Currently the difficulties getting the laminate floors to also look clean are mitigated by the development of special laminate cleaning agents, often highly specialised soaps. Furthermore, upon the washing step using these special laminate cleaners it is recommended to immediately remove the dirty wash water on the floor using a clean damp cloth followed by drying of the floor using a dry absorbent cotton cloth ("Information Sheet - Cleaning and maintenance of laminate flooring in commercial areas" European Producers of Laminate Flooring, 1999). Thus it is necessary to divide the laminate floor into small segments and carry out the washing and drying procedure segment by segment in order to prevent the wash water from air drying and streaking the floor. A laminate floor possessing easier wash properties would save the consumer money for both expensive laminate cleaning agents, for the extra hours of labour needed for the tedious washing and drying procedure described above, and provide an overall cleaner looking laminate.

WO 2005/068181 discloses floor coverings such as laminates and carpets. The laminates are disclosed as comprising a decorative upper layer, optionally a protective overlay and optionally a base layer, wherein said decorative upper layer comprises a web of fibers having deposited therein and/or thereon photocatalyst particles embedded in a binder. The technical disclosure in this document focuses heavily on application of photocatalyst particles on carpets e.g. by spraying a photo catalyst composition on the carpet and is silent about e.g. the morphology of the photocatalyst. For instance, no information seems to be available as to clustering or aggregation of the photocatalyst particles. Furthermore, the photocatalyst composition used for both carpets and laminates is disclosed as having a quite low concentration of binder, e.g. melamine resin, rendering the composition suitable mostly for carpets where stiffening of the carpet must be avoided.

### Object of the invention

An objective of the present invention may be to provide a board or panel such as a laminate having improved washing properties thereby providing an overall cleaner looking laminate.

Still another objective may be to provide a board or panel having a reduced drying time after washing and/or having an improved scratch and wear resistance and/or an improved antimicrobial effect and/or an improved deodorizing effect and/or an improved degradation of VOC effect and/or anti stain properties and/or improved UV absorption properties, resulting in less fading of said board or panel.

A further objective may be to provide a laminate board or panel having improved wash properties and wherein these properties are durable and maintained under use conditions.

A still further objective may be to provide nanoparticle compositions suitable for functionalization of boards or panels. Said formulations may provide said functions more effectively and/or allow for use of less material and/or be more durable and/or be cheaper and/or allow for easier processing and/or processing at lower temperatures and/or allow for use under other illumination conditions than hitherto.

Furthermore, it may be an objective of the present invention to provide a method and an apparatus for use in producing such laminate boards or panels.

### Summary of the invention

Hence, in a first aspect the present invention provides a board or panel having an upper surface comprising, a base; and at least one layer overlaying said base, wherein at least one of said overlaying layers comprises first nanoparticles embedded in the layer such that the upper surface shows hydrophilic characteristics. Thereby, a board or panel may be provided with considerably improved washing properties. Specifically, when washing such a board or panel, water drops are spreading on the surface in such a manner that dirt is easier to suspend and remove without excessive use of special cleaning agents and harsh chemicals. Further drying is significantly faster and more uniform as water dries up substantially as a film instead of as contracting droplets and due to the larger surface area for evaporation. The more uniform drying process further results in that dried up water stains from dirt or dissolved salts in the water are avoided or considerably reduced as they are more evenly distributed on the surface. Thereby an overall cleaner looking board or panel after cleaning are provided.

"Upper" in "upper surface" refers in general to orientation of the board or panels as shown in the accompanying drawings. This means, for instance, that in the preferred embodiments relating to floorings, the "upper surface" is the surface of the floor facing upwardly. In other embodiment, where for instance board or panel is vertically orientated in use, the upper surface is typically the surface facing in horizontal direction

It is to be understood that the at least one layer overlaying said base is attached to said base. Such an attachment may be accomplished by the different parts of the board or panel being glued together for instance - as it appears from many of the preferred embodiments - by being laminated together.

In the present context average crystallite or primary particles size is referred to and is preferably defined herein as an equivalent spherical diameter of the particles. Similarly, the average cluster or aggregate size is preferably defined herein as an equivalents spherical diameter of the cluster or aggregate size.

Many aspect and preferred embodiments of the present invention relates to so-called indoor lighting conditions. Such conditions are in general and preferably characterized by the relatively small amount of UV light available. In contrast, in so-called outdoors conditions on a clear summer day, the energy available from the UV light (λ < 400 nm, and a particular measurement) was found to be 10% of the energy available from the visible light (λ > 400 nm) contribution. In a specific measurement, the energy from a typical indoor light in an office environment showed that that the UV light energy available was only 1.4% of the energy available from the visible light. However, other energy distributions and energy available may be obtained or present in other indoor and outdoor lighting conditions.

In any embodiments according to the present invention said hydrophilic characteristics and considerably improved washing properties are provided by said first nanoparticles embedded in the layer comprises specialized photocatalyst and/or compositions further described below.

According to other preferred embodiments other properties such as scratch, wear and/or abrasion resistance, superhydrophilicity, capability of decomposing organic matter such as volatile organic compounds, deodorizing properties and/or antimicrobial and/or antifungal properties, stain proofing, and UV absorption may further be incorporated into said board or panel by said specialized embedded nanoparticles and/or compositions . Such properties may be incorporated so as to e.g. improve indoor climate improvement and/or to make the board or panel fade resistant.

In an embodiment of this aspect of the invention, this is achieved by the embedded nanoparticles being substantially homogenously distributed in said overlaying layer. This may be obtained by the method according to the present invention. Thereby it is achieved that the properties are substantially maintained over time even if the layer are worn down over by use, wear and tear. In a further embodiment it is assured that the uppermost layer is substantially optically transparent, thereby providing a board and/or panel with substantially the same optical appearance as without said nanoparticles embedded in said upper layer.

In a further embodiment the board or panel may additionally comprise second nanoparticles embedded in at least one of the overlaying layers to improve the scratch and abrasive resistance of the board or panel. The first and second nanoparticles may be embedded in the same layer. The first and second nanoparticles may be of different types, or they may be the same type.

In any of the above mentioned embodiments the nanoparticles may comprise specialized photocatalysts embedded in the at least one overlaying layer such that the upper surface shows hydrophilic characteristics. Preferably, the first nanoparticles in at least one of said overlaying layers comprises photocatalysts embedded in the layer such that the upper surface shows hydrophilic characteristics and the contact angle with water θ < 40° such as < 30°, preferably the contact angle with water θ < 25° such as < 20° under indoor lighting conditions.

The board or panel may in any of the above or below embodiments be a laminate board or panel, assembled by lamination of overlaying polymer resin impregnated sheets and said base by applying heat and pressure thereby making said resin polymerise in a thermosetting reaction resulting in said board or panel comprising said overlaying layer(s).

In a third aspect of the invention relating to the above mentioned embodiments, at least one of the layers overlaying said base is a décor layer, and the nanoparticles are embedded in the décor layer. Alternatively or additionally, one of the at least one layers overlaying said base is an abrasive resistance enhancing layer, having nanoparticles embedded in the abrasive resistance enhancing layer.

In any of the above aspects and embodiments the base may be selected from a medium density fibre board, a high density fibre board, a particle board, a chipboard, a solid wooden board, a veneer board, a plywood board, a parquet board, or a plastic board.

It is well known that a nanomaterial is not just a nanomaterial, and the characteristics of the embedded nanoparticles are important for their performance and e.g. the properties of said board or panel. In a particularly preferred embodiment the embedded nanoparticles have a primary particle size or crystal size of < 50 nm, such as < 30 nm preferably a primary particle size of < 20 nm such as < 10 nm. Hereby, the efficacy of the nanoparticles is improved and/or less nanoparticles are needed to obtain a specific effect.

Primary particles are rarely present as individual primary particles, but in a more or less aggregated form. An efficient control of the agglomerate and/or cluster size is greatly preferred. Hence, in preferred embodiments the embedded nanoparticles have a cluster or aggregate size of < 100 nm, such as < 80 nm preferably a cluster or aggregate size of < 60 nm such as of < 40 nm and even more preferably a cluster or aggregate < 30 nm such as < 20 nm. Thereby, said nanoparticles may be easier to disperse homogeneously in said overlaying layer, and said layer become more optically transparent.

Yet further, the standard deviation of the size distribution of said primary particles for said embedded nanoparticles is preferably less than 5 times the average primary particle size such as a standard deviation of less than 3 times the average primary particle size, and preferably the standard deviation of said particle size distribution is less than 1 times the average primary particle size such as less than 0.5 times the average primary particle size.

In any embodiment of the board or panel according to the present invention, the concentration of said embedded nanoparticles in said layer(s) may be < 10 wt%, such as < 5 wt% preferably a concentration of said nanoparticles < 3 wt% such as < 2 wt% and even more preferably a concentration of said nanoparticles < 1 wt% such as < 0.5 wt%.

In any of the above aspects and embodiments the embedded nanoparticles may comprise oxides and/or oxyhydroxides of one or more of the elements Al, Ti, Si, Ce, Zr or combinations thereof. The second nanoparticles may further comprise a carbonitride.

In any of the above aspects and embodiments the embedded first photocatalyst nanoparticles comprise the anatase and/or the rutile crystal form of titanium or a combination thereof. Photocatalysts of these crystal forms of Titania are well known e.g. P25 TiO2 from Degussa AG, which may be considered as the current industry standard in photocatalysis. It is well known that the anatase and the rutile form of Titania have a band gap of 3,1 eV and 3,2 eV respectively, and thus they are only active in the UV range of light e.g. they are not suitable for functionalization of a board or panel, which is intended for indoor use. The Degussa P25 has an average primary particle size of approximately 25 nm, but is not easily dispersible in e.g. water. The resulting aggregate or cluster size in a suspension is 200-300 nm, which results in a milky appearance. Such milky appearance makes it unsuitable for use as embedded nanoparticles in present invention as it will result in a overlay layer, which are not optically transparent.

The efficacy of a photocatalysts may according to the present invention be improved by utilizing hybrid structures that separates light absorption, charge transport and surface reactions. In one aspect of the present invention this may obtained by decreasing the effective band gap e.g by raising the valence band since the donor level for hydroxyls lies much higher than the valence band edge for (H2+O2)/TiO2. In contrast to this, the 02 reduction level straddles the conduction band level, and lowering of this level may jeopardize efficient charge transfer to absorbed acceptor atoms. This may according such aspect be performed by doping with anions such as N, C, F or S, which gives rise to dopant induced energy levels above the valence band. Hence, the first nanoparticles may according to this aspect comprise one or more of the elements N, C, F, S as oxygen substitutes in the lattice.

In a further aspect of the present invention one or more suitable cation(s) dopant with sufficiently low band gap is introduced to provide efficient visible light absorption e.g. a dopant to an indirect band gap host material. With appropriate doping, a favourable gradient helps to separate the excited electron-hole pair. Said dopant may participate in the photocatalytic reaction and/or shuttle electrons to/from reactive clusters (cooperative catalysts). In a particular preferred embodiment the first nanoparticles may further be a bi-metallic, tri-metallic or multi-metallic compound.

In any of the aspects and embodiments described above, the nanoparticles may further comprise CeO₂ such that the molecular ratio of ceria to Titania is in the range of 0,01 to 1. By adding such a cooperative catalyst the photocatalyst is made more efficient, because the ceria reduces the band gap energy, whereby the properties are enhanced and said cooperative photocatalyst are suitable for indoor use.

Further, in any of the above described aspects or embodiments said nanoparticles may further comprise at least one element selected from the group of Ag, Au, Pt, Pd, Sn, In, Cr, W, Fe, Ni, Co, Bi, Sr, Si, Mo, V, Zr, Al or combinations thereof.

In a preferred embodiment, the nanoparticles are in the form of a core and shell/multilayer structure, and the layers in said nanoparticles may or may not have different compositions.

The photocatalysts may have spherical, cubic or wire shaped crystals or a combination thereof.

In any of the above embodiments the photocatalysts may comprise cooperative catalysts.

Further, in any of the above embodiments the board or panel may have an antimicrobial and anti-fungal upper surface, and/or the board or panel may have a VOC reducing effect, and or the board or panel may have a deodorizing effect and or the board or panel may have a UV absorbing effect.

Objects of the invention may further be obtained by a board or panel according to a fourth aspect of the invention, the board or panel having an upper surface, the board or panel comprising a base; and at least one layer overlaying said base; wherein at least one of said overlaying layers comprises second nanoparticles embedded in the layer to improve the scratch and abrasive resistance of the board or panel. Preferably the embedded nanoparticles are substantially homogenously distributed in said overlaying layer. The board or panel may further comprise the features of any one of the above mentioned aspects and/or embodiments.

Objects of the invention may in a fifth aspect be obtained by a method of manufacturing a board or panel preferably as described for the above mentioned aspects and the embodiments thereof, the method comprising
- impregnating at least one of said unimpregnated overlaying layer(s) with an impregnation fluid composition comprising dispersed nanoparticles in one step;
- drying and/or curing said impregnated layer (s), subsequent to said nanoparticle impregnation step
- impregnating said overlaying layer(s) with a polymer resin in another step;
- drying and/or curing said impregnated layer(s), subsequent to said polymer resin impregnation step; and
- thereafter assembling said laminate board or panel (1) by applying heat and pressure, making said resin polymerise in a thermosetting reaction.

The unimpregnated overlaying sheet(s) may be made of cellulose fibres.

The impregnation fluid composition may comprise nanoparticles and a solvent, said solvent being selected from water, ethylene glycol, butyl ether, aliphatic linear, branched or cyclic or mixed aromatic-aliphatic alcohols, such as methanol, ethanol, propanol, isopropanol, butanol, isobutanol, benzyl alcohol or methoxypropanol or combinations thereof.

In any embodiment the concentration of said nanoparticles in said impregnation fluid composition may be in the range 0.05 to 10 % by weight such as in the range 0.1 to 5 % by weight, and preferably in the range 0.1 to 1 % by weight.

Further, in any embodiments the nanoparticles in said impregnation fluid composition may have a cluster or aggregate size of < 100 nm, such as < 80 nm preferably a cluster or aggregate size of < 60 nm such as of < 40 nm and even more preferably a cluster or aggregate < 30 nm such as < 20 nm.

Further, in any embodiments the pH value of said impregnation fluid composition may be in the range 7 to 13 such as in the range 8 to 12 and preferably in the range 9 to 11 such as in the range 10 to 11. By thus controlling the pH value the cluster or agglomerate size of the nanoparticles may be efficiently controlled and limited. Further, the zeta potential of said impregnation fluid composition is controlled so that it is below -30 mV such as below - 40 mV, and preferably below -50 mV such as below -60 mV. The pH of said impregnation fluid composition has been found to be important for e.g. the processing and stability of said impregnation fluid composition.

The concentration of ammonia in said impregnation fluid composition is in the range 0.05 to 5 % by weight such as in the range 0.1 to 1 % by weight and preferably in the range 0.2 to 0.5 % by weight. Besides assisting in adjusting pH in the desired range ammonia has been found to provide the advantage of evaporating during said impregnation and drying step.

In all of the embodiments the impregnation fluid composition may contain additives, stabilizing agents and surfactants such as plasticizers, antifoaming agents, thickening agents, flame-retarding agents, diluents, UV light stabilizers, sugars, chelating agents, Pluronic^{®} P123 (BASF), silanes, polyacrylates, polycarboxylates, polycarboxylic dispersants, poly acid dispersants, acrylic homopolymers such as polyacrylic acids, silanes, siloxanes or combinations thereof.

In all of the embodiments the impregnation fluid composition may contain one or more binders selected among silanes, siloxanes, alkoxides of titanium, alkoxides of silicium, organic resins such as acrylic resins, vinylic resins, polyvinyl acetate or combinations thereof.

The ratio of concentration (by weight) of the one or more binders to the concentration of said nanoparticles may be in the range 0.001 to 0.3 such as in the range 0.01 to 0.2 and preferably in the range 0.05 to 0.15 such as in the range 0.05 to 0.1.

In all of the above described embodiments the impregnation fluid composition may be applied to the overlaying sheet(s) by spraying, dipping, rolling, brushing or by other conventional application methods.

In all of the above described embodiments the amount of impregnation fluid composition per square meter of overlaying sheet(s) may be in the range 1-200 ml/m² such as in the range 5-100 ml/m² and preferably in the range 10-50 ml/m² such as 20-40 ml of said impregnation fluid composition per square meter of overlaying sheet(s) to be impregnated.

Objects of the invention may in a sixth aspect be obtained by a method of manufacturing a laminate board or panel resulting in a board or panel preferably as described in any of the above aspects or embodiments, said method comprising
- impregnating at least one of said unimpregnated overlaying layer(s) with a polymer resin composition comprising nanoparticles in one step;
- drying and/or curing said nanoparticle polymer resin impregnated layer(s), subsequent to said impregnation step; and
- thereafter assembling said laminate board or panel (1) by applying heat and pressure, making said resin polymerise in a thermosetting reaction.

The unimpregnated overlaying layer may be a sheet(s) made of cellulose fibers.

The methods of manufacturing a board or panel according to aspects of the present invention may as disclosed comprise the step of impregnating at least one unimpregnated overlaying sheet(s) with an impregnation fluid composition comprising dispersed nanoparticles. It is to be understood that unimpregnated in this content refers to a sheet that has not yet been impregnated with the impregnation fluid composition comprising nanoparticles, i.e. the sheet may have been impregnated with other fluid compositions.

The polymer resin used for said polymer resin composition comprising nanoparticles, may be selected from the group comprising melamine formaldehyde resin, phenol formaldehyde resin, urea formaldehyde resin, melamine urea formaldehyde resin, acrylamide resins, urethane resins, epoxy resins, silicon resins, acrylic resins, vinylic resins or mixtures thereof.

The polymer resin used for said polymer resin composition comprising nanoparticles, may be melamine formaldehyde resin containing 40-70 wt%, such as 45-60 wt% melamine formaldehyde in water.

In any of the above embodiments the nanoparticles in said nanoparticle polymer resin composition may be introduced as a dry powder, as a paste or as a suspension and then dispersed in the polymer resin.

In any of the above embodiments a solvent of said suspension of nanoparticles to be dispersed in the polymer resin composition is selected from water, ethylene glycol, butyl ether, aliphatic linear, branched or cyclic or mixed aromatic-aliphatic alcohols, such as methanol, ethanol, propanol, isopropanol, butanol, isobutanol, benzyl alcohol or methoxypropanol or combinations thereof.

In any of the above embodiments said nanoparticles in said nanoparticle polymer resin composition have a cluster or aggregate size of < 100 nm, such as < 80 nm preferably a cluster or aggregate size of < 60 nm such as of < 40 nm and even more preferably a cluster or aggregate < 30 nm such as < 20 nm. The zeta potential of said nanoparticle polymer resin composition may be controlled so that it is below -10 mV such as below -20 mV, and preferably below -30 mV such as below -40 mV and even more preferably so that said zeta potential of said polymer resin dispersion composition is below -50 mV such as below -60 mV.

In either of the above described embodiments the concentration of said Titania (TiO₂) particles may be in the range 0.01 to 5 w/w %, preferably 0.02-2 w/w %, preferably in the range 0.03 to 1.0 w/w %, most preferably 0.05-0.5 w/w %.

In further aspects objects of the invention may be obtained by an impregnation fluid composition preferably being a polymer resin composition, the features of which is described in combination with the above mentioned methods of manufacturing.

Further embodiments and aspects of the invention are presented in the following including the claims and the figures.

### Brief description of figures

The laminate board or panel according to the invention will now be described in more detail with regard to the accompanying figures. The figures show one way of implementing the present invention and is not to be construed as being limiting to other possible embodiments falling within the scope of the attached claim set.
- Fig. 1, in a sectional view, shows a prior art laminate board or panel;
- Fig. 2, in a sectional view, shows a laminate board or panel according to a first aspect of the invention, the laminate board or panel comprising a photocatalytic top layer;
- Fig. 3, in a sectional view, shows a laminate board or panel according to a second and third aspect of the invention, in which hydrophilic nanoparticles are embedded in layers of the board or panel.
- Fig. 4 illustrates the definition of a contact angle, showing a drop of water on a surface. It further shows an example of how the contact angle may be changed by treating the surface with hydrophilic nanoparticles, according to an aspect of the invention;
- Fig. 5. in a top view, shows drops of water deposited on a laminate board before and after the board has been provided with a with a photocatalytic top layer; and
- Figs. 6 and 7, in top views, show examples of effects achieved by aspects of the present invention.
- Fig. 8 shows a graph pertaining to VOC degradation according to the present invention - the small vertical lines along the time axis is indications of interval integrated by the software applied for dataprocessing.

### Embodiments of the invention

The present invention in some aspects is concerned with providing boards or panels, such as laminate boards or panels with different types of nanoparticle containing top layers, e.g. photocatalytic nanoparticles, offering said functions to the laminate boards and panels especially making them easy to wash. Each layer can be preferred from the others e.g. depending upon the price of the laminate boards and panels (low cost/high cost product) and the facilities available by the laminate manufacturers.

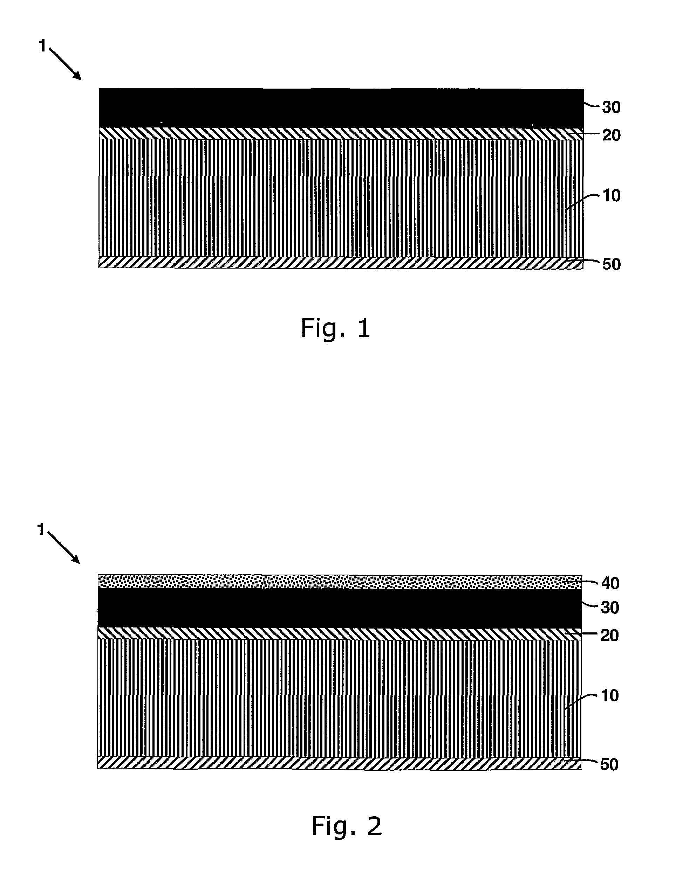

In Fig. 1 a typical composition of a laminate board or panel is shown in a cross-sectional view. From the top, the laminate board 1 comprises the following layers: An abrasive resistance enhancing layer 30, typically introduced in the form of a melamine formaldehyde resin impregnated overlay sheet; a décor layer 20, typically introduced in the form of a polymer resin impregnated paper décor sheet; a base 10 typically in the form of a high density fibre board; and a stabilizing backing layer 50 typically introduced in the form of a polymer resin impregnated sheet.

In Fig.2 a laminate board or panel 1 according to one aspect of the invention is shown. As in Fig. 1, the laminate board or panel 1 comprises an abrasive resistance enhancing layer 30, e.g. introduced in the form of a melamine formaldehyde resin impregnated overlay sheet; a décor layer 20, typically introduced in the form of a polymer resin impregnated paper décor sheet; a base 10 typically in the form of a high density fibre board; and a stabilizing backing layer 50 typically introduced in the form of a polymer resin impregnated sheet. The laminate board or panel 1 further comprises a nanoparticle containing photocatalytic top layer 40.

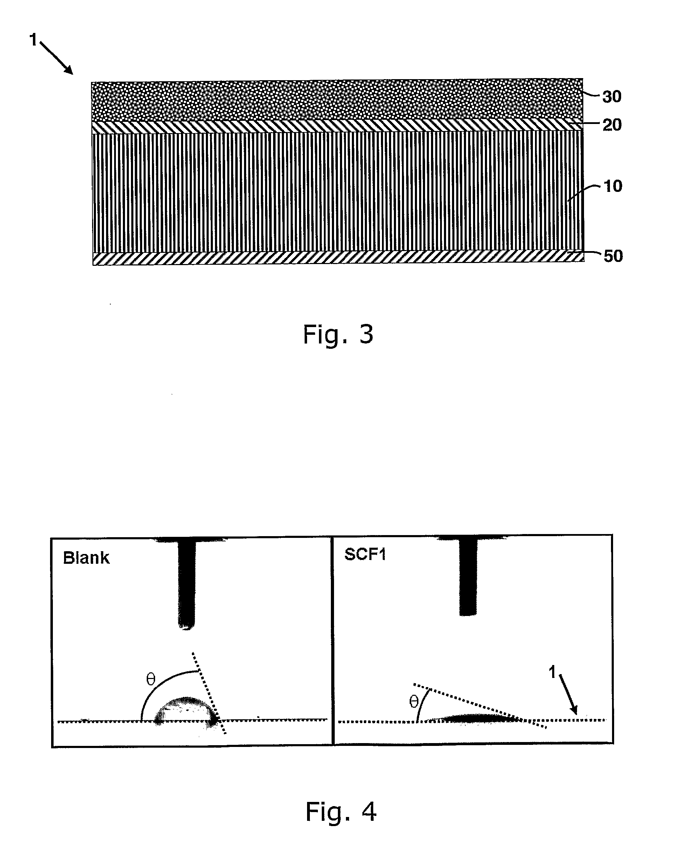

In Fig. 3 a laminate board according to another aspect of the invention is illustrated. In the figure it is shown how photocatalytic nanoparticles are integrated in the abrasive resistance enhancing layer 30. This may be achieved by various methods according to other aspects of the invention to be described in further detail below.

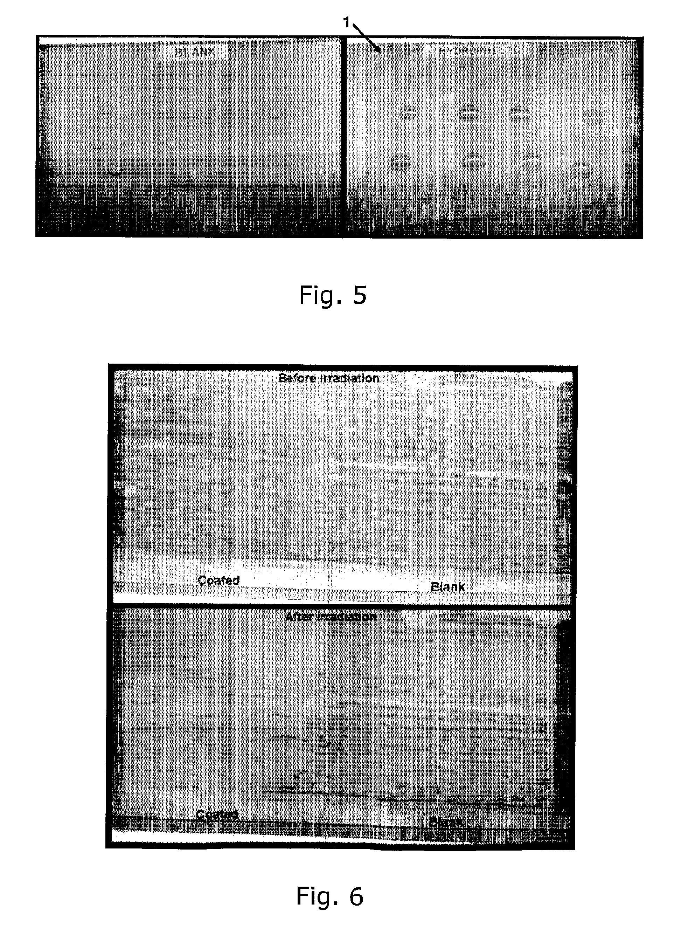

The hydrophilic properties of a surface may be determined by the contact angle with water of the surface. The contact angle, θ, is defined as the tangent to the outer surface of a drop of water placed on the surface taken in a point where the drop contacts the surface, i.e. at the surface/drop rim of the drop. As illustrated in Fig. 4 this can be measured for various surfaces. The figure further shows an example of a surface before (on the left of the figure) and after (on the right of the figure) the board has been provided with a photocatalytic nanoparticle containing top layer. This is further illustrated in Fig. 5, which in a top view, shows drops of water deposited on a typical laminate board before (on the left of the figure) and after (on the right of the figure) the board has been coated with a photocatalytic, hydrophilic top layer.

The board or panel shown in Fig. 6 illustrates the photocatalytic activity of a sample coating, "**SCF2**". On the left side the board has been provided with a nanoparticles containing top layer, and on the right side the board has no such top layer for comparison. The top of the figure shows a situation, where before irradiation of light to the board, both the photocatalytical active part and the non-photocatalytic active "blank" part of the laminate board shows the blue colour of resazurin which was smeared on the laminate board. On the bottom of the figure, is shown a situation where, after 30 min of UV-visible light irradiation (Osram ULTRA-VITALUX sun lamp, 300W 230V E27 FS1) the blue resazurin has been converted to pink resorufin as a proof of photocatalytic activity, but only where the laminate board was provided with a top layer to obtain a photocatalytic layer (left side of figure).

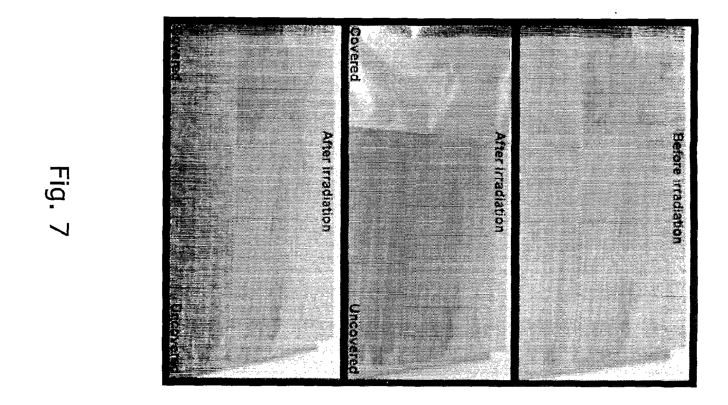

Fig. 7 illustrates the photocatalytic activity of a coated board or panel, having a photocatalytical top layer from, sample "**SCF1**". Before irradiation of light (see the top frame of the figure) the blue colour of resazurin which was smeared on the laminate board is seen. Part of the board or panel was covered with kitchen alumina foil (see left side of the middle frame of the figure) and the entire board or panel irradiated (Osram ULTRA-VITALUX sun lamp, 300W 230V E27 FS1) for 30 min. As shown in the bottom frame of Fig. 7, after irradiation only the uncovered part of the photocatalytic sample showed the pink colour of resorufin, proofing photocatalytic activity. Thus the resazurin is only converted to resorufin when the photocatalytic particles are exposed to light.

Laminate boards and panels are typically made of a base of fiber board (mainly high density fiber board HDF) and 3 or more sheets: a décor sheet, an overlay sheet of cellulose on top and one or more backing sheets sitting on the opposite side of the fiber board base to balance the board and prevent it from curving (see Figure 1). Other sheets are often placed between the fiber board and the décor sheet. The décor sheet could be monochromatic or patterned to look like *e.g.* wood, cork, stone, tiles or a more abstract pattern. The overlay sheet typically contains a certain amount of alumina (Al₂O₃) to give the laminate better abrasive resistance. Furthermore, the overlay sheet is impregnated with a polymer resin, typically melamine formaldehyde resin. The other sheets, most often paper sheets, are also impregnated with resin. The décor sheet is typically impregnated with melamine formaldehyde resin whereas phenol formaldehyde resin often is used in the core of the laminate. The laminate board or panel is assembled applying heat and pressure, making the resin polymerise in a thermosetting reaction. After lamination the polymerised overlay sheet and décor paper constitute the top layer of the laminate board or panel and thus needs to be optically transparent right from the upper surface of the laminate through to the decorative print of the décor paper.

In a specific aspect of the invention photocatalytic particles are incorporated into an overlay sheet e.g. in the décor paper itself prior to polymer resin impregnation. Thus using said photocatalytic overlay sheet or décor paper a photocatalytic layer can be readily introduced applying the existing methods used for manufacturing laminate boards or panels *i.e.* polymer resin impregnation of the photocatalytic overlay sheet or décor paper followed by laminate board fabrication in a heat pressing laminating step.

In an embodiment of this aspect of the invention the overlay layer e.g. the décor sheet may consist of a web of fibers made of any suitable fibers. In one embodiment said fibers are made of cellulose. In a preferred embodiment the overlay sheet is a thin sheet of paper. In another embodiment the commercially available overlay paper already contains alumina (Al₂O₃) particles which have been added to make the produced laminate harder and to give it better abrasive resistance.

In one embodiment photocatalytic particles are deposited onto or into the overlay sheet or the décor paper by impregnation, by applying an impregnation fluid composition comprising photocatalytic particles. The impregnation fluid composition for use in said impregnation step may preferably comprise photocatalytically active nanoparticles of Titania (TiO₂). The nanoparticles may preferably comprise the anatase and/or the rutile and/or the brookite crystal form of Titania or a combination thereof. Further, said photocatalytically active nanoparticles are according to the present invention predominantly present in their final crystal form in said impregnation fluid composition *i.e.* no heat treatment is required for transformation of said nanoparticles into their active form.

The average primary particle size or crystallite size of said nanoparticles of titania expressed as an equivalent spherical diameter is according to the present invention below 30 nm such as below 20 nm, and preferably below 15 nm such as below 10 nm. The average primary particle size or crystallite size according to the present invention may be measured by X-ray Diffraction (XRD) using Scherer's formula. It is further preferred that the particle size distribution of said nanoparticles is relatively narrow. Hence, according to many aspects of the present invention the standard deviation of the particle size distribution of said nanoparticles of titania is less than 5 times the average primary particle size such as a standard deviation of less than 3 times the average primary particle size, and preferably the standard deviation of said particle size distribution is less than 1 times the average primary particle size such as less than 0.5 times the average primary particle size.

Said nanoparticles of Titania may according to some aspects of the present invention further comprise other elements. In some embodiments such elements may be introduced into said nanoparticles with the aim to improve the photocatalytic activity of said nanoparticles by inhibiting charge recombination within said photocatalytically active nanoparticles and/or they may be doped onto the surface or deep inside the bulk of said nanoparticles with the aim of improving the efficacy of said nanoparticles in visible light, like indoor light, as *e.g.* halogen light and LED light, by expanding the wave lengths range of light which can be absorbed by said nanoparticles by changing the overall band gap of said nanoparticles.

In one embodiment said nanoparticles of Titania may further comprise one or more oxides and/or oxyhydroxides of one or more of the elements Sn, Sr, W, Bi, Fe, Ni, Co, V, Si, Mo, Zr or combinations thereof, and in another embodiment of the present invention said nanoparticles of titania may comprise and/or further comprise one or more elements selected from the group of Au, Ag, Cu, Zn, and Pt. In still another embodiment the nanoparticles of Titania may comprise and/or further comprise one or more elements selected from the group of Pd, Rh, Ru, Os, and Ir. In a further embodiment said nanoparticles may be doped or additionally be doped with one or more of the elements N, S and/or C.

It has been found that not only the primary particle size, particle size distribution and composition of said photocatalytically active nanoparticles in said impregnation fluid composition, but also the coagulation index are important for activity of said top layer. Primarily particles in a suspension are present in a more or less coagulated or aggregated form, and the size of said aggregates affects *e.g.* both the activity and the stability of said impregnation fluid composition, as well as the final quality of said top layer. The coagulation index according to the present invention is defined as the ratio of the effective particle size in suspension to the primary particle size. The effective particle size according to the present invention may be measured by *e.g.* a light scattering measurement using *e.g.* a Malvern zetasizer. Hence, according to a preferred embodiment of the present invention, the coagulation index of said nanoparticles in said impregnation fluid composition may preferably be below 15 such as below 10, preferably below 8 such as below 6. A particularly preferred range is 1.5 to 10 such as in the range 2 to 6.

In one embodiment other nanoparticles may be included in the impregnation fluid composition so as to increase the hardness and abrasive resistance of the laminate produced from said impregnated overlay sheet. Examples of said abrasion resistant nanoparticles include but are not limited to nanoparticles of minerals like silica (SiO₂) alumina (Al₂O₃), zirconia (ZrO₂) or mixtures thereof. In a further embodiment said abrasion resistant nanoparticles have a refractive index close to the refractive index of melamine formaldehyde polymer, so as to make the top layer of a typical laminate board or panel transparent. The average primary particle size or crystallite size of the abrasion resistant nanoparticles expressed as an equivalent spherical diameter is according to the present invention below 30 nm such as below 20 nm, and preferably below 15 nm such as below 10 nm. The average primary particle size or crystallite size according to the present invention may be measured by X-ray Diffraction (XRD) using Scherer's formula.

In a preferred embodiment the solvent of said impregnation fluid composition is water.

The impregnation fluid composition may further comprise one or more stabilizers. The weight ratio of the concentration of said stabilizer to the concentration of said particles in suspension may be in the range 0.001 to 0.3 such as in the range 0.01 to 0.2 and preferably in the range 0.05 to 0.15 such as in the range 0.05 to 0.1.

The drying and/or curing of said impregnated overlay sheet or décor paper may be assisted by applying a constant elevated temperature, by infrared treatment, by blowing of hot air or by UV light hardening.

The term "drying" or "curing" as used herein is not limited to materials which are polymerised, but is open to materials which set, harden or solidify by any known means, such as polymerisation, heating, freezing or removal of solvent.

Said method for drying and curing may be aided using a specially designed machine or apparatus. Said machine and apparatus may include a traditional oven or a metal plate. When the drying and curing is performed by heating the temperature may range from room temperature to 250 °C.

Said photocatalyst impregnation and drying/curing steps may be incorporated into an existing production line immediately prior to the polymer resin impregnation of said overlay sheet or décor paper or said photocatalyst impregnated and cured overlay sheet or décor paper can be stored until needed.

A preferred embodiment according to the present said top layer comprises discrete nanoparticles on and in said overlay sheet or décor paper. Said nanoparticles or clusters of nanoparticles may in many applications according to the present invention be of substantially the same size as the effective particle size in said impregnation fluid composition.

In yet another aspect of the invention a photocatalytic layer consists may contain photocatalytic nanoparticles that have been dispersed in a polymer resin composition used for impregnation of the overlay layer such as a décor layer. Thus using said photocatalytic polymer resin for a photocatalytic top layer can be readily introduced applying the existing methods used for manufacturing laminate boards or panels *i.e.* photocatalytic polymer resin impregnation of commercially available overlay sheets or décor papers followed by laminate board fabrication in a heat pressing laminating step.

The photocatalytic composition to be dispersed in the polymer resin may preferably comprise photocatalytically active nanoparticles of Titania (TiO₂). In a preferred embodiment said nanoparticles comprise the anatase crystal form of Titania or a combination thereof. Further, said photocatalytically active nanoparticles are according to the present invention predominantly present in their final crystal form in said composition *i.e.* no heat treatment is required for transformation of said nanoparticles into their active form. The average primary particle size or crystallite size of the nanoparticles, e.g. Titania expressed as an equivalent spherical diameter may preferably be below 30 nm such as below 20 nm, and preferably below 15 nm such as below 10 nm. The average primary particle size or crystallite size may be measured by X-ray Diffraction (XRD) using Scherer's formula. It is further preferred that the particle size distribution of said nanoparticles is relatively narrow. Hence, according to many aspects of the present invention the standard deviation of the particle size distribution of said nanoparticles of titania is less than 5 times the average primary particle size such as a standard deviation of less than 3 times the average primary particle size, and preferably the standard deviation of said particle size distribution is less than 1 times the average primary particle size such as less than 0.5 times the average primary particle size.

The Titania nanoparticles may further comprise other elements. In some embodiments such elements may be introduced into said nanoparticles with the aim to improve the photocatalytic activity of said nanoparticles by inhibiting charge recombination within said photocatalytically active nanoparticles and/or they may be doped onto the surface or deep inside the bulk of said nanoparticles with the aim of improving the efficacy of said nanoparticles in visible light, like indoor light, as *e.g.* halogen light and LED light, by expanding the wave lengths range of light which can be absorbed by said nanoparticles by changing the overall band gap of said nanoparticles. In one embodiment said nanoparticles of Titania may thus further comprise one or more oxides and/or oxyhydroxides of one or more of the elements Sn, Sr, W, Bi, Fe, Ni, Co, V, Si, Mo, Zr or combinations thereof. In another embodiment the nanoparticles of Titania may comprise and/or further comprise one or more elements selected from the group of Au, Ag, Cu, Zn, and Pt. In yet another embodiment the Titania nanoparticles may comprise and/or further comprise one or more elements selected from the group of Pd, Rh, Ru, Os, and Ir. Also, in a further embodiment said nanoparticles may be doped or additionally be doped with one or more of the elements N, S, F, I and/or C.

The photocatalytic suspension composition may comprise one or more stabilizing agent/-s or surfactants for stabilizing said nanoparticles in said photocatalytic suspension composition. According to an embodiment said stabilizing agent is selected among sugars, chelating agents, silanes, polyacrylates, polycarboxylates, polycarboxylic dispersants, poly acid dispersants, acrylic homopolymers such as polyacrylic acids, silanes, siloxanes or combinations thereof. The weight ratio of the concentration of said stabilizer to the concentration of said particles in said photocatalytic suspension composition may be in the range 0.001 to 0.3 such as in the range 0.01 to 0.2 and preferably in the range 0.05 to 0.15 such as in the range 0.05 to 0.1.

The photocatalytic composition to be dispersed in the polymer resin, whether it is introduced as a powder, a paste or a suspension, may be added to the polymer resin at any given time. In one embodiment of the invention the photocatalytic composition is dispersed into the polymer resin immediately prior to the impregnation of overlay sheets or décor papers with polymer resin. Said dispersion process may be aided by a specially designed machine or apparatus.

Also the coagulation index is important for the activity of said nanoparticle containing layer. Primarily particles in a suspension are present in a more or less coagulated or aggregated form, and the size of said aggregates affects *e.g.* both the activity and the stability of said polymer resin dispersion composition, as well as the final quality of said top layer. The coagulation index according to the present invention is defined as the ratio of the effective particle size in suspension to the primary particle size. The effective particle size according to the present invention may be measured by *e.g.* a light scattering measurement using *e.g.* a Malvern zetasizer. Hence, according to a preferred embodiment of the present invention, the coagulation index of said nanoparticles in said polymer resin dispersion is below 15 such as below 10, preferably below 8 such as below 6. A particularly preferred range is 1.5 to 10 such as in the range 2 to 6.

In one embodiment of the invention other nanoparticles may be included in the polymer resin dispersion composition so as to increase the hardness and abrasive resistance of the laminate produced from said polymer resin dispersion. Examples of said abrasion resistant nanoparticles include but are not limited to nanoparticles of minerals like silica (SiO₂) alumina (Al₂O₃), zirconia (ZrO₂) or mixtures thereof. In an embodiment said abrasion resistant nanoparticles have a refractive index close to the refractive index of melamine formaldehyde polymer, so as to make the top layer of a typical laminate board or panel transparent. The average primary particle size or crystallite size of said abrasion resistant nanoparticles expressed as an equivalent spherical diameter is according to the present invention below 30 nm such as below 20 nm, and preferably below 15 nm such as below 10 nm. The average primary particle size or crystallite size according to the present invention may be measured by X-ray Diffraction (XRD) using Scherer's formula.

### Illustrative example: Conventional laminate production.

A laminate board was made by lamination of several resin-impregnated sheets using a high density fiber board as base. Two sheets impregnated with phenol formaldehyde resin were placed on top of the fiber board to impart strength. On top of these sheets was placed a melamine formaldehyde resin impregnated décor sheet (monochromatic or patterned to look like e.g. wood, cork, stone, tiles or a more abstract pattern) and at the very top a melamine formaldehyde resin impregnated overlay sheet of cellulose containing alumina (Al₂O₃) particles to give the laminate better abrasive resistance. Underneath the fiber board two resin impregnated backing sheets were placed to balance the board and prevent it from curving. The laminate board was assembled applying heat and pressure, making the resins polymerise in a thermosetting reaction.

### Example 1: Applying a photocatalytic top layer - preconditioning.

"Pergo Original Beech PO 22201" laminate floor boards, recommended for heavy domestic use, were used as model laminate boards for applying top coatings in examples 1a-d. The laminate boards were cleaned by wiping the boards with isopropanol using a microfiber cloth. One end of the boards, half of the laminate board, was preconditioned which is important to get the best uniform and most durable photocatalytic top layer. The preconditioning fluid composition was a 3 wt% CeO₂ dispersion in water with a primary particle size of the ceria nanoparticles of 12 nm determined as the equivalent spherical diameter from BET measurements. The cleaning fluid composition had a pH of 5.1 and the median particle size in dispersion was 160 nm determined by Malvern's ZetasizerNano. A trigger spray bottle containing the cleaning fluid was shaken and the cleaning fluid composition sprayed over the laminate surface (15 ml/m²). A microfiber wipe was used to distribute the cleaning fluid composition across the laminate surface and the surface was carefully polished moving a microfiber wipe in circular movements. The polishing was terminated when the fluid was fully polished into the laminate, affording a dry laminate board. The contact angle was measured using the PGX from FIBRO System AB (see Table 1).

### Example 1a: Applying a photocatalytic top layer: Top layers SCF1 and SCF2.

The top layer fluid used was a stable nanoparticle dispersion based on a 1 wt% dispersion of TiO₂ (anatase) in water. The average primary particle size was 8 nm (expressed as an equivalent spherical diameter and measured by X-ray Diffraction using Scherer's formula) and the median particle size in dispersion was 18 nm as determined by Malvern's ZetasizerNano. The top layer fluid was applied to the preconditioned surface of two laminate boards (**SCF1** and **SCF2**) using a trigger spray bottle, in 15 mL/m² and 30 mL/m² amounts, respectively. A microfiber wipe was used to distribute the top layer fluid across the preconditioned half of the laminate surface, moving in circular movements. The laminate boards were left to dry under ambient conditions for 15 min whereupon they were further dried and cured exposed to UV-visible light (Osram ULTRA-VITALUX sun lamp, 300W 230V E27 FS1) for 12 h. The contact angle with water was measured for both the blank (non-coated) and the two coated halves of the laminate boards, applying the PGX from FIBRO System AB (see Figure 4 and Table 1). These measurements were repeated at random positions on the laminate board yielding similar values. Upon UV-visible light exposure the coated part of the laminate board had clearly become hydrophilic, which could be measured but also seen by dropping drops of water on the laminate board (see Figure 4). Importantly the photocatalytic top layer was transparent making it invisible on the laminate board for sample **SCF1** and only slightly visible for the thicker top layer **SCF2** (see Table 1). The photocatalytic properties of the UV-visible light irradiated top coated laminate boards also afforded laminate boards which could dry up without leaving streaks or marks from soap upon washing.

### Example 1b: Applying a photocatalytic top layer: Top layer SCF3.

The top layer fluid used was a stable nanoparticle dispersion based on a 1 wt% dispersion of silver doped TiO₂ (anatase) in water. The average primary particle size was 8 nm (expressed as an equivalent spherical diameter and measured by X-ray Diffraction using Scherer's formula) and the median particle size in dispersion was 19 nm as determined by Malvern's ZetasizerNano. The top layer fluid was applied (15 mL/m²) to the preconditioned surface of a laminate board **SCF3** using a trigger spray bottle. A microfiber wipe was used to distribute the top layer fluid across the preconditioned half of the laminate surface, moving in circular movements. The laminate board was left to dry under ambient conditions for 15 min whereupon it was further dried and cured exposed to UV-visible light (Osram ULTRA-VITALUX sun lamp, 300W 230V E27 FS1) for 12 h. The contact angle with water was measured for both the blank (non-coated) and the coated part of the laminate board, applying the PGX from FIBRO System AB (see Table 1). These measurements were repeated at random positions on the laminate board yielding similar values. Upon light exposure the coated part of the laminate board had clearly become hydrophilic, as evidenced by the low contact angle. Importantly the photocatalytic top layer was transparent making it invisible on the laminate board. The photocatalytic properties of the UV-visible radiated top coated laminate board also afforded a laminate board which could dry up without leaving streaks or marks from soap upon washing.

### Example 1c: Applying a photocatalytic top layer: Reference top layer Ref1.

The photocatalytic top layer fluid composition was made using only commercially available components. Thus the photocatalytic particles used were Aeroxide^{®} TiO2 P 25 from Degussa GmbH (powder, average primary particle size 21 nm). The nanoparticles (1 wt%) were dispersed in an aqueous binder mixture containing 5.7 wt% PC-Mull VP 204/3 from Posichem. The dispersion was further stabilised by addition of ammonia adjusting pH to 10.7. This top layer fluid was applied (15 mL/m²) to the preconditioned surface of a laminate board **Ref1** using a trigger spray bottle. A microfiber wipe was used to distribute the top layer fluid across the preconditioned half of the laminate surface, moving in circular movements. The laminate board was left to dry under ambient conditions for 15 min whereupon it was further dried and cured exposed to UV-visible light (Osram ULTRA-VITALUX sun lamp, 300W 230V E27 FS1) for 12 h. The contact angle with water was measured for both the blank (non-coated) and the coated part of the laminate board, applying the PGX from FIBRO System AB (see Table 1). These measurements were repeated at random positions on the laminate board yielding similar values. Although the board clearly showed a hydrophilic surface upon radiation, as evidenced by the low contact angle, the top layer appeared opaque making the laminate look hazy. Further still, after 7 days of curing the photocatalytic top layer could be rubbed off using a damp cloth.

### Example 1d: Applying a photocatalytic top layer: Reference top layer Ref2.

The photocatalytic top layer fluid composition was made using only commercially available components. Thus the photocatalytic particles used were VP Disp. W 740 X TiO₂ from Degussa GmbH (a water based dispersion having a 40 wt% TiO₂ content and a mean aggregate size ≤ 100 nm). The Degussa nanoparticle dispersion (1 wt% dry matter) was further dispersed in an aqueous binder mixture containing 5.7 wt% PC-Mull VP 204/3 from Posichem. The dispersion was finally stabilised by addition of ammonia adjusting pH to 10.7. This top layer fluid was applied (15 mL/m²) to the preconditioned surface of a laminate board **Ref2** using a trigger spray bottle. A microfiber wipe was used to distribute the top layer fluid across the preconditioned half of the laminate surface, moving in circular movements. The laminate board was left to dry under ambient conditions for 15 min whereupon it was further dried and cured exposed to UV-visible light (Osram ULTRA-VITALUX sun lamp, 300W 230V E27 FS1) for 12 h. The contact angle with water was measured for both the blank (non-coated) and the coated part of the laminate board, applying the PGX from FIBRO System AB (see Table 1). These measurements were repeated at random positions on the laminate board yielding similar values. Although the board clearly showed a hydrophilic surface upon radiation, as evidenced by the low contact angle, the top layer appeared opaque making the laminate look hazy. Further still, after 7 days of curing the photocatalytic top layer could be rubbed off using a damp cloth.

### Example 2: Applying a photocatalytic top layer by impregnation of overlay paper.

The photocatalytic impregnation fluid used was a stable nanoparticle dispersion based on a 1 wt% dispersion of anatase TiO₂ in water. The average primary particle size was 8 nm (expressed as an equivalent spherical diameter and measured by X-ray Diffraction using Scherer's formula) and the median particle size in dispersion was 18 nm as determined by Malvern's ZetasizerNano. The dispersion was stabilised using Pluronic^{®} P123 (BASF). The application of the nanoparticles was assisted using polyvinylacetate as impregnation fluid binder system. The impregnation fluid was applied to a standard overlay paper of cellulose (25 g/m²) by spraying. The impregnation was carried out twice (2 x 10 ml/m²) - one impregnation on each side of the paper, leaving time for the paper to dry/cure between the first and second impregnation. The dry photocatalyst-impregnated overlay paper was further impregnated with standard melamine formaldehyde resin (48% dry matter) affording a resin impregnated photocatalytic overlay sheet with a density of 95 g/m². A laminate board was produced stacking from the bottom: a melamine formaldehyde resin impregnated balance sheet, a high density fiber board, a melamine formaldehyde resin impregnated décor paper and on top the melamine formaldehyde resin impregnated photocatalytic overlay paper before conventional lamination (190 °C, 20 bar). The finished photocatalytic laminate board was exposed to UV-visible light (Osram ULTRA-VITALUX sun lamp, 300W 230V E27 FS1) for 12 h, whereupon the contact angle with water was measured applying the PGX from FIBRO System AB (se Table 1). These measurements were repeated at random positions on the laminate board yielding similar values. Upon light exposure the laminate board had clearly become hydrophilic, as evidenced by the low contact angle. Furthermore, the top photocatalytic melamine layer was fully transparent making the appearance of the décor paper free of any haziness. The photocatalytic properties of the UV-visible light irradiated laminate board also afforded a laminate board which could be washed and left to dry up without leaving streaks or marks from soap.

### Example 3: Applying a photocatalytic top layer by dispersing photocatalysts in polymer resin.

The nanoparticles used were silver doped anatase with an average primary particle size of 8 nm (expressed as an equivalent spherical diameter and measured by X-ray Diffraction using Scherer's formula). The nanoparticles were introduced to the commercially available melamine formaldehyde resin (48% dry content, pH = 9.9) as a dispersion in an isopropanol-water mixture and dispersed using a Silverson L4RT mixer to give a 1 wt% dispersion of nanoparticles in melamine formaldehyde resin. To the dispersion was also added Pluronic^{®} P123 (BASF) for further stabilisation of the nanoparticles. The median particle size in the melamine formaldehyde resin dispersion was 27 nm as determined by Malvern's ZetasizerNano. Commercially available overlay paper of cellulose (25 g/m²) was impregnated using the photocatalyst functionalised melamine formaldehyde resin affording an impregnated overlay paper with a density of 100 g/m². A laminate board was produced stacking from the bottom: a melamine formaldehyde resin impregnated balance sheet, a high density fiber board, a melamine formaldehyde resin impregnated décor paper and on top the melamine formaldehyde resin impregnated photocatalytic overlay paper before conventional lamination (190 °C, 20 bar). The finished photocatalytic laminate board was exposed to UV-visible light (Osram ULTRA-VITALUX sun lamp, 300W 230V E27 FS1) for 12 h, whereupon the contact angle with water was measured applying the PGX from FIBRO System AB (se Table 1). These measurements were repeated at random positions on the laminate board yielding similar values. Upon light exposure the laminate board had clearly become hydrophilic, as evidenced by the low contact angle. Furthermore, the top photocatalytic melamine layer was fully transparent making the appearance of the décor paper free of any haziness. The photocatalytic properties of the UV-visible light irradiated laminate board also afforded a laminate board which could be washed and left to dry up without leaving streaks or marks from soap.

**Table 1. Contact angle measurements, appearance and durability.**

| **Treatment** | **Contact Angle^{a}** | **Appearance^{b}** | **Durability^{c}** |
|---|---|---|---|
| Blank | 71.0° | 1 | - |
| Preconditioning^{d} | 42.9° | 2 | Not wipe safe |
| Example 1a: **SCF1^{e}** | < 20° | 1 | Wipe safe |
| Example 1a: **SCF2^{e}** | < 10° | 2 | Wipe safe |
| Example 1b: **SCF3^{e}** | < 20° | 1 | Wipe safe |
| Example 1c: **Ref1** | 25.6° | 4 | Not wipe safe |
| Example 1d : **Ref2** | 44.6° | 4 | Not wipe safe |
| Example 2: Laminate | 26.2° | 1 | - |
| Example 3: Laminate | 24.7° | 1 | - |

| | | | |
|---|---|---|---|
| ^{a}) The contact angle with water is measured . ^{b)} The appearance on a scale from 1-5, as judged by transparency and haziness, where 1 is no visible difference from non-coated laminate and 5 is very hazy. ^{c)} The top layer was wipe safe if it was not damaged by wiping a damp cloth over the surface. ^{d)} The decrease in contact angle upon preconditioning was only temporarily, lasting less than 24 h . ^{e)} The contact angles were so small that they were difficult to measure exact. | | | |

### Example 4: Photocatalytic activity

The conversion of the blue dye resazurin to the pink dye resorufin has been used as an efficient indicator of photocatalysis (A. Mills, J. Wang, S.-K. Lee, M. Simonsen *Chem. Commun.* **2005**, 2721-2723): A solution comprising 3 g of a 1.5 wt% aqueous solution of hydroxyethyl cellulose, 0.3 g of glycerol and 4 mg of resazurin is applied as a coating to the photocatalytic surface. Upon activation of the photocatalyst by irradiation of light, the applied blue coating will change colour to pink, proving photocatalytic activity.
Thus all the photocatalytic laminate boards in examples 1-3 (except the non-durable **Ref1** and **Ref2** from example 1c and 1d, respectively) were tested using said qualitative method: The dye solution was smeared on top of the laminate boards using a piece of a microfiber cloth whereupon the dye coating was left to dry for 1 h. The dye coated laminate boards were exposed to UV-visible light (Osram ULTRA-VITALUX sun lamp, 300W 230V E27 FS1) for 30 min and the colour of the dye coating noted. All the laminate boards tested (examples 1-3 except the non-durable **Ref1** and **Ref2**) showed photocatalytic activity. Examples can be seen in Figures 5 and 6. In Figure 5 it is shown that where the photocatalytic layer has been applied to the board there is a change of colour and thus photocatalytic activity upon irradiation, whereas no change in colour is observed upon irradiation of the dye deposited on the piece of the board lacking the photocatalytic layer. Figure 6 illustrates that without access to light (in this case denied by a sheet of kitchen alumina foil) there is no change in colour and thus no photocatalytic activity even though a photocatalytic layer has been applied to the laminate board.

### Example 5: Preparation of an impregnation fluid and polymer resin composition

An impregnation fluid composition was prepared by first mixing deionised water (45 wt%), Hombikat UV100 from Sachtleben Chemie GmbH (30 wt%), glycerine (20 wt%) and concentrated aqueous ammonia (5 wt%) in a Silverson L4RT mixer for 10 min at top speed. The resulting slurry was transferred to a LabStar bead mill (from Netzsch Feinmahltechnik GmbH) equipped with a MiniCer grinding chamber and loaded with SiLi beads Type ZY 0.10-0.20 mm in diameter from Sigmund Lindner GmbH. The slurry was milled 18 h with a tip speed of 5.8 m/s affording a near transparent dispersion. The average particle size in the dispersion (measured by Volume) was 62 nm as determined by Malvern's ZetasizerNano. The dispersion was mixed 2:1 (wt/wt) with melamine formaldehyde resin powder Kauramin Tränkharz 771 from BASF. The mixture was stirred until all Kauramin Tränkharz 771 was in solution so as to produce a polymer resin composition. The average particle size in the melamine formaldehyde resin dispersion (measured by Volume) was 74 nm as determined by Malvern's ZetasizerNano. The resin was used for impregnation of commercially available overlay paper of cellulose (25 g/m²) affording an impregnated overlay paper with a density of 107 g/m² upon drying. A laminate board was produced stacking from the bottom: a melamine formaldehyde resin impregnated balance sheet, a high density fiber board, a melamine formaldehyde resin impregnated décor paper and on top the nano-functionalized overlay paper. Lamination for 2 min at 150 °C and 60 bar afforded a laminate board. The top photocatalytic melamine layer made the appearance of the décor paper look slightly hazy. The board was exposed to UV-visible light (Osram ULTRA-VITALUX sun lamp, 300W 230V E27 FS1) for 4 h, whereupon the contact angle with water was measured applying the PGX from FIBRO System AB (se Table 2). These measurements were repeated at random positions on the laminate board, however all the contact angles were in the range 70-80 and the laminate board was just as hydrophobic as conventional laminate boards. Drops of water deposited on the surface was smeared out on the board using a micro fiber cloth, however, the water immediately contracted to form new drops of water. Hence the milled dispersion was reinvestigated, and it was found that the crystallinity of the particles had decreased by 91% during milling as determined by X-ray diffraction using calcium fluoride as a 100% crystalline internal reference (H. Jensen, K. D. Joensen, J.-E. Jørgensen, J. S. Pedersen, E. G. Søgaard, *Journal of Nanoparticle Research* **2004**, *6*, 519-526).

### Example 6: Testing of photocatalytic activity

The photocatalytic activity of the boards made according to example 5 was evaulated using the procedure for photocatalytic degradation of VOC described in example 16, however substantially no photcatalytic activity (VOC degradation) was observed.

### Example 7: Preparation of an impregnation fluid composition and polymer resin compostion

An impregnation fluid compostion was produced by first mixing deionised water (22 wt%), a commercial photocatalyst, Kronos VLP 7000 (40 wt%), glycerine (30 wt%), concentrated aqueous ammonia (4 wt%) and 2-amino-methylpropanol (4 wt%) in a Silverson L4RT mixer for 10 min at top speed. The resulting slurry was transferred to a LabStar bead mill (from Netzsch Feinmahltechnik GmbH) equipped with a MiniCer grinding chamber and loaded with Sigmund-Lindner ceramic beads 0.10-0.20 mm in diameter. The slurry was milled 19 h with a tip speed of 5.8 m/s affording a near transparrent brownish dispersion. The average particle size in the dispersion (measured by Volume) was 44 nm as determined by Malvern's ZetasizerNano. The dispersion was mixed 2:1 (wt/wt) with melamine formaldehyde resin powder Kauramin Tränkharz 771 from BASF. The mixture was stirred until all Kauramin Tränkharz 771 was in solution. The average particle size in the melamine formaldehyde resin dispersion (measured by Volume) was 48 nm as determined by Malvern's ZetasizerNano. The resin was used for impregnation of commercially available overlay paper of cellulose (25 g/m²) affording an impregnated overlay paper with a density of 103 g/m² upon drying. A laminate board was produced stacking from the bottom: a melamine formaldehyde resin impregnated balance sheet, a high density fiber board, a melamine formaldehyde resin impregnated décor paper and on top the nano-functionalized overlay paper. Lamination for 2 min at 150 °C and 60 bar afforded a laminate board. The top photocatalytic melamine layer was transparent making the appearance of the décor paper virtually free of any haziness. The board was exposed to 6 mW/cm² visual light (λ > 400 nm) for 12 h, whereupon the contact angle with water was measured applying the PGX from FIBRO System AB (se Table 2). These measurements were repeated at random positions on the laminate board, however all the contact angles were in the range 70-80 and the laminate board was just as hydrophobic as conventional laminate boards. Drops of water deposited on the surface was smeared out on the board using a micro fiber cloth, however, the water immediately contracted to form new drops of water. Hence the milled dispersion was reinvestigated, and it was found that the crystallinity of the particles had decreased by 88% as determined by X-ray diffraction using calcium fluoride as a 100% crystalline internal reference (H. Jensen, K. D. Joensen, J.-E. Jørgensen, J. S. Pedersen, E. G. Søgaard, Journal of Nanoparticle Research 2004, 6, 519-526).

### Example 8: Testing of photocatalytic activity

The photocatalytic activity of the boards made according to example 7 was evaulated using the procedure for photocatalytic degradation of VOC described in example 16, however substantially no photcatalytic activity (VOC degradation) was observed.

### Example 9: Preparation of a preferred impregnation fluid composition

A preferred impregnation fluid composition suitable for use in an embodiment of the present invention was prepared by first mixing commercial photocatalyst, Kronos VLP 7000 (30 wt%), deionised water (50 wt%), propylene glycol (15 wt%) and triethylamine (5 wt%) in a Silverson L4RT mixer for 10 min at top speed. The resulting slurry was transferred to a LabStar bead mill (from Netzsch Feinmahltechnik GmbH) equipped with a MicroCer grinding chamber and loaded with YTZ® ceramic beads 0.05 mm in diameter (from TOSOH Europe B.V.). The slurry was milled 6 h with a tip speed of 10 m/s affording a brownish dispersion. The average particle size in the dispersion (measured by Volume) was 31 nm as determined by Malvern's ZetasizerNano, and the crystallinity had decreased 33% during the milling process, as determined by X-ray diffraction using calcium fluoride as a 100% crystalline internal reference (H. Jensen, K. D. Joensen, J.-E. Jørgensen, J. S. Pedersen, E. G. Søgaard, Journal of Nanoparticle Research 2004, 6, 519-526).

### Example 10: Preparation of a preferred polymer resin composition I comprising nanoparticles

A preferred impregnation fluid composition (Example 9) was mixed 1:1 (V/V) with Bindzil 15/500 from EKA Chemicals AB (15 wt% colloidal silica) to give a dispersion comprising both Kronos VLP 7000 and colloidal silica nanoparticles. To the dispersion was added melamine formaldehyde resin powder Kauramin Tränkharz 771 from BASF. Dispersion and melamine formaldehyde powder were mixed 3:2 (wt/wt). The mixture was stirred until all Kauramin Tränkharz 771 was in solution, affording a polymer resin composition comprising nanoparticles. The average particle size for the Kronos VLP 7000 particles in the melamine formaldehyde resin dispersion (measured by Volume) was 33 nm as determined by Malvern's ZetasizerNano and the average particle size of the colloidal silica 7 nm.

### Example 11: Preparation of another preferred polymer resin composition II comprising nanoparticles

An impregnation fluid composition according to example 9 was mixed with melamine formaldehyde resin powder Kauramin Tränkharz 771 from BASF 2:1 (wt/wt). The mixture was stirred until all Kauramin Tränkharz 771 was in solution. The average particle size in the melamine formaldehyde resin dispersion (measured by Volume) was 32 nm as determined by Malvern's ZetasizerNano.

### Example 12: Laminate board by one-step impregnation of overlay

A commercially available overlay paper of cellulose (25 g/m²) was impregnated using Polymer resin composition I according to example 10, affording an impregnated overlay paper with a density of 98 g/m² upon drying. A laminate board was produced stacking from the bottom: a melamine formaldehyde resin impregnated balance sheet, a high density fiber board, a melamine formaldehyde resin impregnated décor paper and on top the overlay paper containing Polymer resin composition I. Lamination for 2 min at 150 °C and 60 bar afforded the laminate board. The board was exposed to 6 mW/cm² visual light (λ > 400 nm) for 12 h, whereupon the contact angle with water was measured applying the PGX from FIBRO System AB (se Table 2). These measurements were repeated at random positions on the laminate board yielding similar values. Upon light exposure the laminate board had clearly become hydrophilic, as evidenced by the low contact angle and its ability to spread a continues film of water. Furthermore, the top photocatalytic melamine layer was fully transparent making the appearance of the décor paper free of any haziness. The laminate board could be washed and left to dry up without leaving streaks or marks from soap.

### Example 13: Laminate board by two-step impregnation of overlay

Commercially available melamine formaldehyde impregnated overlay paper (160 g/m²) was further impregnated using Polymer resin composition II, example 11. Polymer resin composition II was applied to the top side of the overlay paper by brushing (61 mL/m²) affording a nanofunctionalised impregnated overlay paper upon drying. A laminate board was produced stacking from the bottom: a melamine formaldehyde resin impregnated balance sheet, a high density fiber board, a melamine formaldehyde resin impregnated décor paper and on top the overlay paper top impregnated with Polymer resin composition II. Lamination for 3 min at 150 °C and 80 bar afforded the laminate board. The board was exposed to 6 mW/cm² visual light (λ > 400 nm) for 12 h, whereupon the contact angle with water was measured applying the PGX from FIBRO System AB (se Table 2). These measurements were repeated at random positions on the laminate board yielding similar values. Upon light exposure the laminate board had clearly become hydrophilic, as evidenced by the low contact angle and its ability to spread a film of water. Furthermore, the top photocatalytic melamine layer was fully transparent making the appearance of the décor paper free of any haziness. The laminate board could be washed and left to dry up without leaving streaks or marks from soap.

### Example 14: Laminate board II by two-step impregnation of overlay

Commercially available melamine formaldehyde impregnated overlay paper (160 g/m²) was further impregnated using the Impregnation fluid composition, example 9. The Impregnation fluid composition was applied to the top side of the overlay paper by brushing (74 mL/m²) affording a nanofunctionalised impregnated overlay paper upon drying. A laminate board was produced stacking from the bottom: a melamine formaldehyde resin impregnated balance sheet, a high density fiber board, a melamine formaldehyde resin impregnated décor paper and on top the overlay paper top impregnated with the Impregnation fluid composition. Lamination for 3 min at 150 °C and 80 bar afforded the laminate board. The board was exposed to 6 mW/cm² visual light (λ > 400 nm) for 12 h, whereupon the contact angle with water was measured applying the PGX from FIBRO System AB (se Table 2). These measurements were repeated at random positions on the laminate board yielding similar values. Upon light exposure the laminate board had clearly become hydrophilic, as evidenced by the low contact angle and its ability to spread a film of water. Furthermore, the top photocatalytic melamine layer was fully transparent making the appearance of the décor paper free of any haziness. The laminate board could be washed and left to dry up without leaving streaks or marks from soap.

### Example 15: Laminate board III by two-step impregnation of overlay

The impregnation fluid (example 9) was applied to a standard overlay paper of cellulose (25 g/m²) by spraying. The impregnation was carried out twice (2 x 20 ml/m²) - one impregnation on each side of the paper, leaving time for the paper to dry between the first and second impregnation. The dry photocatalyst-impregnated overlay paper was further impregnated with melamine formaldehyde resin made by mixing Kauramin Tränkharz 771 powder from BASF and deionized water 1:1 (wt/wt) affording a resin impregnated photocatalytic overlay sheet with a density of 95 g/m². A laminate board was produced stacking from the bottom: a melamine formaldehyde resin impregnated balance sheet, a high density fiber board, a melamine formaldehyde resin impregnated décor paper and on top the overlay paper top impregnated with the Impregnation fluid composition. Lamination for 2 min at 150 °C and 60 bar afforded the laminate board. The board was exposed to 6 mW/cm² visual light (λ > 400 nm) for 12 h, whereupon the contact angle with water was measured applying the PGX from FIBRO System AB (se Table 2). These measurements were repeated at random positions on the laminate board yielding similar values. Upon light exposure the laminate board had clearly become hydrophilic, as evidenced by the low contact angle and its ability to spread a film of water. Furthermore, the top photocatalytic melamine layer was fully transparent making the appearance of the décor paper free of any haziness. The laminate board could be washed and left to dry up without leaving streaks or marks from soap.

### Example 16: Degradation of VOC

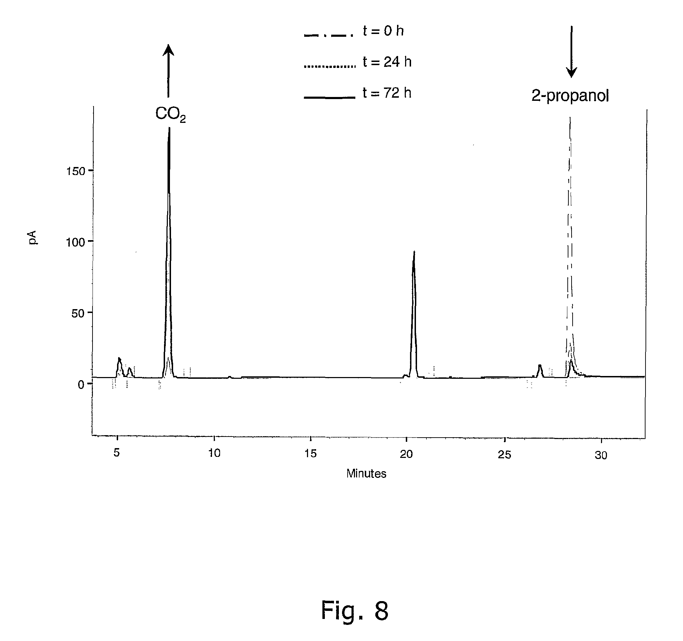

As an example of the ability of the photocatalytic layers to break down VOC under indoor lighting conditions the degradation of 2-propanol was selected as a model study. A laminate made from 2 sheets of overlay paper impregnated with Polymer resin composition II was cut into pieces of the size 1.1 cm x 6.0 cm. The laminate pieces were placed in 10 mL GC sample vials and to the vials were added 2 µL of a 10% (V/V) aqueous solution of 2-propanol, whereupon the sample vials were sealed. Within 10 min the solution had evaporated inside the vials and the sample vials were exposed to 6 mW/cm² visual light (λ > 400 nm). The gases content of a sample vial was analyzed by GC (a 7890A GC System from Agilent Technologies using a HP-Plot/Q [Part No. 1905P-QO3] 15 mm capillary column with a diameter of 0.5 mm) at times t = 0 h, 24 h and 72 h. The chromatograms are shown in figure 8. The GC was also equipped with a methanizer (a nickel catalyst tube accessory, G2747A, converting CO₂ to methane) allowing analysis of CO₂. Thus it was possible to monitor the concomitant decrease of 2-propanol and increase of CO₂ as evidence for photocatalytic degradation of the organic compound 2-propanol in air. As can be seen from figure 8 the amount of 2-propanol dropped dramatically within 24 h and substantially all 2-propanol was degraded after 72 h. As expected concomitant increase of CO₂ was also observed.

**Table 2. Contact angle measurements.**

| **Example** | **Contact Angle^{a}** |
|---|---|
| 5 | 73° |
| 7 | 76° |
| 12 | 44° |
| 13 | 46° |
| 14 | 37° |
| 15 | 59° |

| | |
|---|---|
| ^{a)} The contact angle with water is measured. | |

The invention may also be defined as:
Item 1. A board or panel (1), having an upper surface, comprising
   - a base (10); and
   - at least one layer (20, 30, 40) overlaying said base (10);
   wherein at least one of said overlaying layers comprises first nanoparticles embedded in the layer such that the upper surface shows hydrophilic characteristics wherein said embedded first nanoparticles have a primary particle size of < 50 nm, such as < 30 nm preferably a primary particle size of < 20 nm such as < 10 nm.
Item 2. A board or panel (1) wherein the first nanoparticles are in aggregated or clustered form.
Item 3. A board or panel (1) according to item 2, wherein clusters or aggregates of said embedded nanoparticles have an average cluster or aggregate size of < 300 nm < 200 nm.
Item 4. A board or panel (1) according to item 2 or 3, wherein clusters or aggregates of said embedded nanoparticles have an average cluster or aggregate size of < 100 nm, such as < 80 nm preferably a cluster or aggregate size of < 60 nm such as of < 40 nm and even more preferably a cluster or aggregate < 30 nm such as < 20 nm.
Item 5. A board or panel (1) according to item 3 or 4, wherein cluster or aggregate size is measured before the particles are being the embedded in the layer.
Item 6. A board or panel (1) according to any of the preceding items, wherein the first nanoparticles are embedded in a polymer selected from the group comprising melamine formaldehyde, phenol formaldehyde, urea formaldehyde, melamine urea formaldehyde, acrylamide, urethane, epoxy, acrylic, vinylic or mixtures thereof.
Item 7. A board or panel (1) according to any of the preceding items assembled by lamination of one or more overlaying polymer resin impregnated sheets and said base (10) by applying heat and pressure thereby making said resin polymerise in a thermosetting reaction resulting in said board or panel (1) comprising said overlaying layer(s)
Item 8. A board or panel (1) according to item 7, wherein one of the at least one layers overlaying said base (10) is a décor layer (20), and wherein said nanoparticles are embedded in said décor layer.
Item 9. A board or panel (1) according to any of the preceding items, wherein board or panel comprising a single overlaying layer comprising first nanoparticles said layer has a thickness of > 100 nm; > 500 nm > 3 um; > 20 um > 0.1 mm > 0.5 mm > 1 mm.
Item 10. A board or panel according to any of the preceding items, wherein the first nanoparticles comprising nanoparticles of at least two different type, such as being different with respect to morphology, chemical structure, chemical composition, size and/or crystalline structure.
Item 11. A board or panel (1) according to any of the preceding items, wherein at least one of said overlaying layers comprises or further comprises second nanoparticles embedded in the layer to improve the scratch and abrasive resistance of the board or panel (1).
Item 12. A board or panel (1) according to any of the preceding items, wherein the embedded first and/or second nanoparticles are substantially homogenously distributed in said overlaying layer.
Item 13. A board or panel (1) according to item 12, comprising more than one layer and wherein the concentration of first and/or second nanoparticles is different in the layers.
Item 14. A board or panel (1) according to item 12, wherein said first and second nanoparticles are embedded in the same layer.
Item 15. A board or panel (1) according to any of the items 11-14, wherein, said first and second nanoparticles are of different types, such as being different with respect to morphology, chemical structure, chemical composition, size and/or crystalline structure.
Item 16. A board or panel (1) according to any of items 11-15, wherein said first and second nanoparticles are of the same type such as being the same with respect to morphology, chemical structure, chemical composition, size and/or crystalline structure.
Item 17. A board or panel (1) according to any of the preceding items wherein the first and/or second nanoparticles provides a hydrophilic water dispersive surface so that water initially deposited as drops will uniform into a stable water film if mechanically actuated e.g. by a wiping action performed by a cloth.
Item 18. A board or panel (1) according to any of the preceding items, wherein at least one of said overlaying layers comprises one or more embedded nanoparticles in the layer such that the upper surface shows hydrophilic characteristics and the contact angle with water θ of less than 60°, such as less than 50° , such as less than 40°, preferably the contact angle with water is less θ < 30° such as a contact angle with water of less than 20°.
Item 19. A board or panel (1) according to any of preceding items, wherein said first and/or second nanoparticles comprises photocatalytic nanomaterials embedded in the at least one overlaying layer such that the upper surface shows hydrophilic characteristics.
Item 20. A board or panel (1) according to any of preceding items, wherein said first and/or second nanoparticles comprises or further comprises colloidal silica embedded in the at least one overlaying layer and wherein the concentration of said colloidal silica is up to 40 wt%, such as up to 30 wt% and preferably up to 20 wt%, such as up to 10%, such that the upper surface shows hydrophilic characteristics.
Item 21. A board or panel (1) according to any of the preceding items, wherein said first nanoparticles in at least one of said overlaying layers comprises photocatalysts embedded in the layer such that the upper surface shows hydrophilic characteristics and the contact angle with water θ < 40° such as < 30°, preferably the contact angle with water θ < 25° such as < 20° under indoor lighting conditions.
Item 22. A board or panel (1) according to any of the preceding items, wherein one of the at least one layers overlaying said base (10) is an abrasive resistance enhancing layer (30), and wherein said first and/or second nanoparticles are embedded in said abrasive resistance enhancing layer (30).
Item 23. A board or panel (1) according to any of the preceding items, wherein said base (10) is selected from a medium density fiber board, a high density fiber board, a particle board, a chipboard, a solid wooden board, a veneer board, a plywood board, a parquet board, or a plastic board.
Item 24. A board or panel (1) according to any of the preceding items 19-23, wherein the concentration of said embedded photocatalytic nanoparticles in said layers is less than 30 wt%, such as less than20 wt% preferably a concentration of said nanoparticles of less than 15 wt%.
Item 25. A board or panel (1) according to any of the preceding items 19-24, wherein the concentration of said embedded photocatalytic nanoparticles < 10 wt%, such as < 5 wt% preferably a concentration of said nanoparticles < 3 wt% such as < 2 wt% and even more preferably a concentration of said nanoparticles < 1 wt% such as < 0.5 wt%.
Item 26. A board or panel (1) according to any of preceding items, wherein said embedded nanoparticles comprises oxides and/or oxyhydroxides of one or more of the elements Al, Ti, Si, Ce, Zr or combinations thereof.
Item 27. A board or panel (1) according to any of the preceding items, wherein said first nanoparticles comprises the anatase crystal form of titania or a modified version thereof.
Item 28. A board or panel (1) according to any of the preceding items 19-27, wherein said photo catalytic nanoparticles has a crystallinity of at least 25 % such as at least 35 %, and preferably a crystallinity of at least 45 % such as at least 55 %, and even more preferably a crystallinity of at least 65 % such as a crystallinity of at least 75 %.
Item 29. A board or panel (1) according to any of the preceding items, wherein said first nanoparticles comprises Zinc Oxide or a modified version thereof.
Item 30. A board or panel (1) according to any of the preceding items, wherein said first nanoparticles are a bi-metallic, tri-metallic or multi-metallic compound.
Item 31. A board or panel (1) according to item 28-30, wherein said nanoparticles further comprise at least one element selected from the group of Ag, Au, Pt, Sn, Cr, W, Fe, Ni, Co, Bi, Sr, Si, Mo, V, Zr, Al or combinations thereof.
Item 32. A board or panel (1) according to any of the items 28-31, wherein said nanoparticles further comprise at least one element selected from the group of Pd, Cu, Eu, La, Ce or combinations thereof.
Item 33. A board or panel (1) according to any of the items 28-32, wherein said nanoparticles comprises one or more of the elements N, C, F, S, I as oxygen substitutes in the lattice.
Item 34. A board or panel (1) according to any of the preceding items, wherein the uppermost layer is substantially optically transparent.
Item 35. A board or panel (1) according to any of the preceding items 19-34, wherein said photocatalytic nanoparticles comprises:
   - titania in the anatase form and,
   - Cu in a concentration of 0,01 to 0,5 wt % such as 0,05 to 0,30 wt %, preferably in the range 0,05 to 0,15 wt % and
   - Carbon and/or nitrogen in a concentration of 0,01 to 6 wt % such as in the range 0,1 to 5 wt % and
   wherein the crystallinity of said nanoparticles is at least 25 % such as at least 35 %, and preferably the crystallinity is at least 45 % such as at least 55 %.
Item 36. A board or panel (1) according to any of the preceding items 19-34, wherein said photocatalytic nanoparticles comprises:
   - titania in the anatase form and
   - Pd in a concentration of 0,01 to 0,5 wt % such as 0,05 to 0,30 wt %, preferably in the range 0,05 to 0,15 wt % and
   - Carbon and/or nitrogen in a concentration of 0,01 to 6 wt % such as in the range 0,1 to 5 wt %.
Item 37. A board or panel (1) according to any of the preceding items 19-34, wherein said photocatalytic nanoparticles comprise:
   - titania in the anatase form and
   - V in a concentration of 0,01 to 0,5 wt % such as 0,05 to 0,30 wt %, preferably in the range 0,05 to 0,15 wt % and
   - Carbon and/or nitrogen in a concentration of 0,01 to 6 wt % such as in the range 0,1 to 5 wt %.
Item 38. A board or panel (1) according to any of the preceding items 19-34, wherein said photocatalytic nanoparticles comprise:
   - titania in the anatase form and
   - an element from the lanthanoide group of the periodic table such as Eu, La or Ce in a concentration of 0,01 to 0,5 wt % such as 0,05 to 0,30 wt %, preferably in the range 0,05 to 0,15 wt % and
   - Carbon and/or nitrogen in a concentration of 0,01 to 6 wt % such as in the range 0,1 to 5 wt %.
Item 39. A board or panel (1) according to any of the preceding items 19-34, wherein said photocatalytic nanoparticles comprise:
   - titania in the anatase form and
   - Mo in a concentration of 0,01 to 0,5 wt % such as 0,05 to 0,30 wt %, preferably in the range 0,05 to 0,15 wt % and
   - Carbon and/or nitrogen in a concentration of 0,01 to 6 wt % such as in the range 0,1 to 5 wt %.
Item 40. A method of manufacturing a board or panel (1), preferably being a board or panel according to any preceding items 1-39, said method comprising
   - impregnating at least one of said unimpregnated overlaying sheet(s) with an impregnation fluid composition comprising dispersed nanoparticles in one step;
   - drying and/or curing said impregnated sheet(s), subsequent to said nanoparticle impregnation step
   - impregnating said overlaying sheet(s) with a polymer resin in another step;
   - drying and/or curing said impregnated sheet(s), subsequent to said polymer resin impregnation step; and
   - thereafter assembling said laminate board or panel (1) by applying heat and pressure, making said resin polymerise in a thermosetting reaction.
Item 41. A method according to item 40, wherein the steps of impregnating with an impregnation fluid and a polymer resin are repeated a number of times.
Item 42. A method according to item 40 or 41, wherein said unimpregnated overlaying sheet(s) are made of cellulose fibers.
Item 43. A method according to item 40-42,
   - wherein said impregnation fluid composition comprises nanoparticles and a solvent, said solvent being selected from water, ethylene glycol, butyl ether, aliphatic linear, branched or cyclic or mixed aromatic-aliphatic alcohols, such as methanol, ethanol, propanol, isopropanol, butanol, isobutanol, benzyl alcohol or methoxypropanol or combinations thereof, and
   - wherein the concentration of said first and/or second nanoparticles in said impregnation fluid composition is in the range 0,001 to 40 % by weight such as 0.05 to 30 % by weight, and preferable in the range 0,05-10 % by weight such as 0.1 to 5 % by weight, and
   - wherein said nanoparticles in said impregnation fluid composition have a cluster or aggregate size of less than 60 nm such as < 40 nm and even more preferably a cluster or aggregate < 30 nm such as < 20 nm.
Item 44. A method according to any of the items 40-43, wherein said impregnation fluid further comprising propylene glycol in a concentration in the range 1-25 % such as a concentration in the range 2-20%, and preferably in the range 3-15 %.- Tryethylamine in a concentration of 1-10 % such as in the range 1-7,5 and preferably in the range 2,5 to 5 % by weight.
Item 45. A method according to any of items 40-44, wherein the amount of impregnation fluid composition per square meter of overlaying sheet(s) is in the range 1-200 ml/m² such as in the range 5-100 ml/m² and preferably in the range 10-50 ml/m² such as 20-40 ml of said impregnation fluid composition per square meter of overlaying sheet(s) to be impregnated.
Item 46. A method of manufacturing a laminate board or panel (1), preferably being a board or panel according to any preceding items 1-39, said method comprising
   - impregnating at least one of said unimpregnated overlaying sheet(s) with a polymer resin composition comprising nanoparticles in one step;
   - drying and/or curing said nanoparticle polymer resin impregnated sheet(s), subsequent to said impregnation step; and
   - thereafter assembling said laminate board or panel (1) by applying heat and pressure, making said resin polymerise in a thermosetting reaction.
Item 47. A method according to item 46, wherein the step of impregnating is repeated a number of times.
Item 48. A method according to item 46 or 47, wherein said unimpregnated overlaying sheet(s) is a sheet comprising cellulose fibers.
Item 49. A method according to any of items 46-48, wherein the polymer resin used for said polymer resin composition comprising nanoparticles, is selected from the group comprising melamine formaldehyde resin, phenol formaldehyde resin, urea formaldehyde resin, melamine urea formaldehyde resin, acrylamide resins, urethane resins, epoxy resins, silicon resins, acrylic resins, vinylic resins or mixtures thereof.
Item 50. A method according to any of items 52-54, wherein the polymer resin used for said polymer resin composition comprising nanoparticles, is melamine formaldehyde resin containing 40-70 wt%, such as 45-60 wt% melamine formaldehyde in water.
Item 56. A method according to any of items 54-55, wherein said nanoparticles in said nanoparticle polymer resin composition are introduced as a dry powder, as a paste or as a suspension and then dispersed in the polymer resin.
Item 57. A method according to item 56, wherein a solvent of said suspension of nanoparticles to be dispersed in the polymer resin composition is selected from water, ethylene glycol, butyl ether, aliphatic linear, branched or cyclic or mixed aromatic-aliphatic alcohols, such as methanol, ethanol, propanol, isopropanol, butanol, isobutanol, benzyl alcohol or methoxypropanol or combinations thereof.
Item 58. A method according to any of items 52-57, wherein said nanoparticles in said nanoparticle polymer resin composition have a cluster or aggregate size of of < 60 nm such as of < 40 nm and even more preferably a cluster or aggregate < 30 nm such as < 20 nm.
Item 59. A method according to any of items 52-58, wherein the concentration of said nanoparticles in said nanoparticle polymer resin composition is in the range 0.05 to 10 % by weight such as in the range 0.1 to 5 % by weight.
Item 60. A method according to any of the preceding items 39-59, wherein the steps of impregnating with a polymer resin composition comprising dispersed nano particles is performed no later than 36 h after the resin has been provided.
Item 61. A sheet of material being impregnated with an impregnation fluid and/or polymer resin composition as disclosed in any of the items 39-60.
Item 62. A polymer resin composition according to any of the preceding items 46-60.
Item 63. An impregnation fluid according to any of the preceding items 40-60.

## Claims

1. A board or panel (1), having an upper surface, comprising
- a base (10); and
- at least one layer (20, 30, 40) overlaying said base (10);
wherein at least one of said overlaying layers comprises first photocatalytic nanoparticles, wherein said first nanoparticles comprises the anatase form of titania or a modified version thereof embedded in the layer such that the upper surface shows hydrophilic characteristics,
wherein said embedded first nanoparticles have cluster or aggregate < 80 nm preferably a cluster or aggregate size of < 60 nm such as of < 40 nm and even more preferably a cluster or aggregate < 30 nm such as < 20 nm, and
wherein a concentration of said embedded first nanoparticles in said layer(s) is < 10 wt%, such as < 5 wt%, preferably a concentration of said nanoparticles < 3 wt% such as < 2 wt%, and even more a concentration of said nanoparticles < 1 wt% such as < 0.5 wt%.

2. A board or panel (1) according to any of the preceding claims, wherein said photocatalytic nanoparticles has a crystallinity of at least 55 %, preferably a crystallinity of at least 65 %, more preferably a crystallinity of at least 75 %.

3. A board or panel (1) according to claim 1 or 2, wherein said embedded first nanoparticles have a primary particle size of < 30 nm preferably a primary particle size of < 20 nm such as < 10 nm and comprises the anatase form of titania or a modified version thereof.

4. A board or panel (1) according to any of the preceding claims, wherein the first nanoparticles are embedded in a polymer selected from the group comprising melamine formaldehyde, phenol formaldehyde, urea formaldehyde, melamine urea formaldehyde, acrylamide, urethane, epoxy, acrylic, vinylic or mixtures thereof.

5. A board or panel (1) according to any of the preceding claims, wherein at least one of said overlaying layers comprises or further comprises second nanoparticles embedded in the layer to improve the scratch and abrasive resistance of the board or panel (1).

6. A board or panel (1) according to claim 7, wherein the second nanoparticles are silica (SiO₂), alumina (Al₂O₃), zirconia (ZrO₂) or mixtures thereof.

7. A board or panel (1) according to any of the preceding claims, wherein at least one of said overlaying layers comprises one or more embedded nanoparticles in the layer such that the upper surface shows hydrophilic characteristics and the contact angle with water θ of less than 60°, such as less than 50°, such as less than 40°, preferably the contact angle with water is less θ < 30° such as a contact angle with water of less than 20°.

8. A board or panel (1) according to any of the preceding claims, wherein said first nanoparticles in at least one of said overlaying layers comprises photocatalysts embedded in the layer such that the upper surface shows hydrophilic characteristics and the contact angle with water θ < 40° such as < 30°, preferably the contact angle with water θ < 25° such as < 20° under indoor lighting conditions.

9. A board or panel (1) according to any one of the preceding claims, wherein one of the at least one layers overlaying said base (10) is a décor layer (20), and wherein said nanoparticles are embedded in said décor layer.

10. A board or panel (1) according to any of the preceding claims, wherein one of the at least one layers overlaying said base (10) is an abrasive resistance enhancing layer (30), and wherein said first and/or second nanoparticles are embedded in said abrasive resistance enhancing layer (30).

11. A board or panel (1) according to any of the claims 28-32, wherein said nanoparticles comprises one or more of the elements N, C, F, S, I as oxygen substitutes in the lattice.

12. A method of manufacturing a laminate board or panel (1), said method comprising
- impregnating at least one of said unimpregnated overlaying sheet(s) with a polymer resin composition comprising nanoparticles in one step, wherein the nanoparticles comprises photocatalytically active nanoparticles of titania (TiO2) in anatase form;
- drying and/or curing said nanoparticle polymer resin impregnated sheet(s), subsequent to said impregnation step; and
- thereafter assembling said laminate board or panel (1) by applying heat and pressure, making said resin polymerise in a thermosetting reaction.

13. The method according to claim 12, wherein said nanoparticles in said polymer resin composition have a cluster or aggregate size of < 60 nm such as of < 40 nm and even more preferably a cluster or aggregate size of < 30 nm such as < 20 nm.

14. The method according to claim 12 or 13, wherein the polymer resin is selected from the group comprising melamine formaldehyde resin, phenol formaldehyde resin, urea formaldehyde resin, melamine urea formaldehyde resin, acrylamide resins, urethane resins, epoxy resins, silicon resins, acrylic resins, vinylic resins or mixtures thereof.

15. The method according to any one of claims 12-14, wherein polymer resin composition further comprises abrasive resistant nanoparticles, preferably silica (SiO₂), alumina (Al2O3), zirconia (ZrO₂) or mixtures thereof.
